# EUROPÄISCHE PATENTSCHRIFT

(11) **EP 2 681 419 B1**
(45) Veröffentlichungstag und Bekanntmachung des Hinweises auf die Patenterteilung: **29.07.2015**
(21) Anmeldenummer: 12710188.9
(22) Anmeldetag: 02.03.2012
(51) Int. Cl.: F04D 29/06, F01D 25/20, F01M 11/06, F16N 7/40, F01M 1/12

(54) **PROPELLERTURBINENTRIEBWERK MIT EINEM ÖLVERSORGUNGSSYSTEM UND VERFAHREN ZUR ÖLVERSORGUNG FÜR EIN PROPELLERTURBINENTRIEBWERK**
TURBOPROP ENGINE WITH AN OIL SUPPLY SYSTEM AND METHOD FOR SUPPLYING OIL FOR A TURBOPROP ENGINE
TURBOPROPULSEUR AVEC UN SYSTÈME D'ALIMENTATION EN HUILE ET PROCÉDÉ D'ALIMENTATION EN HUILE D'UN TURBOPROPULSEUR

(30) Priorität: 03.03.2011 DE 102011012976
(43) Veröffentlichungstag der Anmeldung: 08.01.2014
(73) Patentinhaber: Rolls-Royce Deutschland Ltd & Co KG, 15827 Blankenfelde-Mahlow (DE)
(72) Erfinder: HOMEYER, Christian, 10715 Berlin (DE); WILLENBORG, Klaus, 12103 Berlin (DE); FIOLA, Roland, 15834 Rangsdorf (DE)
(74) Vertreter: Müller, Wolfram Hubertus
(86) Internationale Anmeldenummer: PCT/EP2012/053635
(87) Internationale Veröffentlichungsnummer: WO 2012/117095

(56) Entgegenhaltungen:
- DE-A1- 4 304 482
- GB-A- 658 855
- GB-A- 683 888
- US-A- 2 413 439
- US-A1- 2005 135 929
- US-A1- 2011 030 385

## Beschreibung

Die Erfindung betrifft ein Propellerturbinentriebwerk mit einem Ölversorgungssystem mit einem ersten Ölkreislauf zur Versorgung der Turbomaschine und einem zweiten Ölkreislauf zur Versorgung des Propellersystems sowie ein Verfahren zur Ölversorgung eines Propellertriebwerks.

Ein Propellerturbinentriebwerk (Turboproptriebwerk, Profantriebwerk, Propellertriebwerk) besteht im Wesentlichen aus einer einen Kompressor, eine Brennkammer und eine Turbine umfassenden Turbomaschine und mindestens einem über ein Propellergetriebe angetriebenen mit einer Propellerverstellvorrichtung zur Änderung des Anstellwinkels der Propellerblätter verbundenen Propeller. Propellertriebwerke sind bekanntermaßen mit zwei voneinander getrennten Ölkreisläufen ausgerüstet. Die Ölversorgung der Turbomaschine erfolgt über einen ersten Ölkreislauf, in dem das Öl von einem Öltank über eine erste Ölförderpumpe (Turbomaschinenpumpe), einen ersten Ölfilter, einen ersten Ölkühler und die Lager und Getriebeteile der Turbomaschine zurück zum Öltank zirkuliert. In einen zur Ölversorgung des Propellersystems vorgesehenen zweiten Ölkreislauf sind ein Öltank sowie eine zweite - an die Propellerwelle gekoppelte - Ölförderpumpe (Propellerhauptpumpe), ein zweiter Ölfilter, ein zweiter Ölkühler und das mit einem Teil der geförderten Ölmenge versorgte Propellergetriebe und des Weiteren eine an die Propellerverstelleinrichtung angeschlossene und mit einem weiteren Teil der zugeführten Ölmenge beaufschlagte Hochdruckpumpe (Propellerhochdruckpumpe) zur Erzeugung des für die Verstellung der Propellerblätter erforderlichen Drucks eingebunden.

Das zuvor beschriebene Ölversorgungssystem ist insofern nachteilig, als im zweiten Ölkreislauf unter bestimmten Bedingungen die Ölzufuhr zur Hochdruckpumpe und damit der Ölvordruck an der Hochdruckpumpe zu gering sind, so dass das Propellerverstellsystem unterversorgt und dessen Funktion zur Erzielung eines gewünschten Anstellwinkels der Propellerblätter eingeschränkt ist und darüber hinaus Schäden an der Hochdruckpumpe auftreten können. Zu geringer Ölfluss und entsprechend geringer Ölvordruck an der Hochdruckpumpe (Propellerhochdruckpumpe) sind zum einen dadurch bedingt, dass die an die Propellerwelle gekoppelte zweite Ölförderpumpe (Propellerhauptpumpe) bei einer niedrigen Propellerdrehzahl einen zu geringen Druck aufbaut. Des Weiteren kann bei einer Änderung der Triebwerksleistung bzw. Propellerdrehzahl ein transientes Propellerverstellmanöver den angeforderten Ölvolumenstrom der Hochdruckpumpe stark ansteigen lassen, so dass der Ölvordruck an der Hochdruckpumpe unter dem geforderten Druck liegt und somit nur ein geringer, den Anforderungen an die Verstellung der Propellerblätter nicht genügender Steuerdruck zur Verfügung steht. Ein unter diesen Umständen in Verbindung mit der für die Propellerblattverstellung benötigten großen Ölmenge in der Hochdruckpumpe entstehender, eine Dampfblasenbildung bewirkender Unterdruck kann zu der zuvor erwähnten Beschädigung der Hochdruckpumpe führen und deren Lebensdauer erheblich verringern. Zur Vermeidung dieser Nachteile wurde bereits vorgeschlagen, die Ölförderpumpe im zweiten Ölkreislauf zu vergrößern, was jedoch mit einer Gewichtszunahme und unerwünschten Leistungsverlusten verbunden ist.

Aus der US 2005/0135929 A1 ist ein Propellerturbinentriebwerk mit einem Ölversorgungssystem bekannt, bei dem eine Propellerpumpe eine Steuereinheit, die den Anstellwinkel der Propellerblätter einstellt, mit Öl versorgt. Diese Propellerpumpe wird im Normalfall über eine erste Leitung mit Öl versorgt. Wenn der Öldruck in der ersten Leitung abfällt, wird ein Ventil derart eingestellt, dass der Propellerpumpe nun Öl über eine zweite Leitung zugeführt wird, jedoch nicht mehr über die erste Leitung.

Die US 2011/0030835 A1 beschreibt eine Propellerantriebseinheit mit einem Propeller, der von einer Turbomaschine angetrieben wird, und mit einem Ölversorgungssystem, das einen ersten Ölkreislauf und eine in diesen eingebundene erste Ölförderpumpe zur Versorgung der Turbomaschine und einen zweiten Ölkreislauf und eine in diesen eingebundene zweite Ölförderpumpe zur Versorgung des Propellergetriebes aufweist.

Der Erfindung liegt die Aufgabe zugrunde, ein Propellerturbinentriebwerk mit einem aus zwei getrennten Ölkreisläufen bestehenden Ölversorgungssystem so auszubilden, dass unter Vermeidung von Leistungsverlusten und zusätzlichem Gewicht an der zur Steuerung der Propellerblattverstellung vorgesehenen Hochdruckpumpe der erforderliche Ölvordruck anliegt, um die Funktion der Propellerblattverstellvorrichtung und eine lange Lebensdauer der Hochdruckpumpe zu gewährleisten.

Erfindungsgemäß wird die Aufgabe mit einem Propellerturbinentriebwerk und einem Verfahren gemäß den Merkmalen der Patentansprüche 1 und 7 gelöst. Vorteilhafte Weiterbildungen der Erfindung sind Gegenstand der Unteransprüche.

Der Grundgedanke der Erfindung besteht darin, dass die beiden jeweils zur Ölversorgung der Turbomaschine sowie des Propellergetriebes und der einer Propellerverstellvorrichtung zugeordneten Hochdruckpumpe vorgesehenen separaten Ölkreisläufe in Fließrichtung hinter der ersten und zweiten Ölförderpumpe über eine Ölzufuhrleitung miteinander verbunden sind, und zwar derart, dass ein begrenzter Ölvolumenstrom vom ersten in den zweiten Ölkreislauf, und zwar nur in dieser Richtung, fließen kann, wenn bei einer Druckminderung im zweiten Ölkreislauf eine bestimmte Druckdifferenz zwischen dem ersten und dem zweiten Ölkreislauf unterschritten wird, wobei der erste und zweite Ölkreislauf an einen gemeinsamen Öltank angeschlossen sind. Auf diese Weise wird auch bei niedrigen Propellerdrehzahlen und transienten Propellerverstellvorgängen ein ausreichend hoher Ölvordruck an der Hochdruckpumpe erzeugt, so dass die Funktion der Propellerverstelleinrichtung nicht beeinträchtigt wird und die Hochdruckpumpe nicht beschädigt wird. Durch die Begrenzung des Ölvolumenstroms in der die beiden Ölkreisläufe verbindenden Ölzufuhrleitung wird verhindert, dass während der Ölentnahme aus dem ersten Ölkreislauf eine Unterversorgung der Turbomaschine mit Öl auftreten kann.

Die Freigabe der Ölzufuhr vom ersten in den zweiten Ölkreislauf erfolgt über ein in die Ölzufuhrleitung eingebundenes, aufgrund der Druckdifferenz nur in Richtung des zweiten Ölkreislaufes öffnenden Ventils, vorzugsweise eines Rückschlagventils.

Zur Begrenzung der Größe des aus dem ersten Ölkreislauf abgeführten Ölvolumenstroms ist in die Ölzufuhrleitung ein vorzugsweise als Blende ausgebildeter Durchflussbegrenzer eingebunden.

Das erfindungsgemäße Verfahren sieht die Ölversorgung des Propellertriebwerks mithilfe eines ersten Ölkreislaufs für die Turbomaschine sowie eines zweiten Ölkreislaufs für das Propellergetriebe und eine über eine Hochdruckpumpe versorgte Propellerverstellvorrichtung aus einem gemeinsamen Ölreservoir vor, wobei bei einem unterhalb eines vorgegebenen Niveaus liegenden Ölvordruck an der Hochdruckpumpe ein begrenzter Ölvolumenstrom aus dem Turbomaschinenölkreislauf in den Propellerölkreislauf geleitet wird.

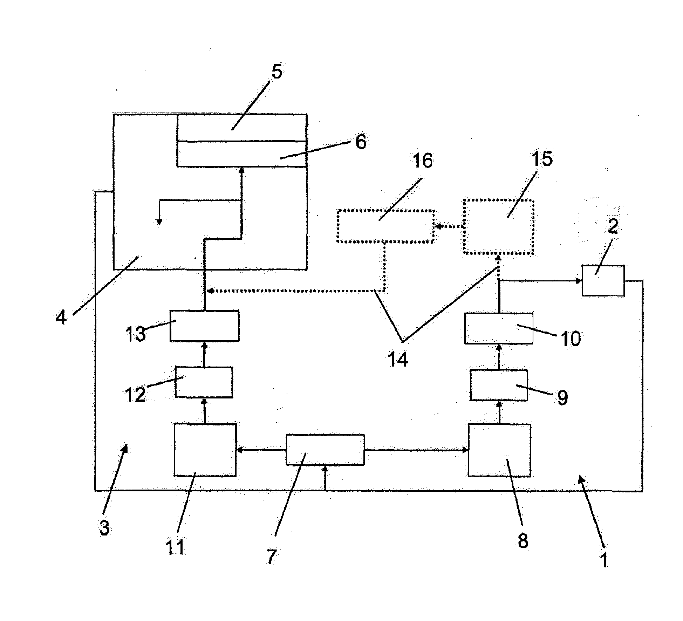

Ein Ausführungsbeispiel der Erfindung wird anhand der Zeichnung, in deren einziger Figur ein aus zwei Ölkreisläufen bestehendes Ölversorgungssystem für ein Turboproptriebwerk als Blockschaubild dargestellt ist, näher erläutert.

Das Ölversorgungssystem umfasst einen ersten Ölkreislauf 1 (Turbomaschinenkreislauf) zur Ölversorgung der Getriebe und Lager einer Turbomaschine 2 und einen zweiten Ölkreislauf 3 (Propellerkreislauf) zur Zuführung einer bestimmten Ölmenge zur Lagerschmierung und -kühlung eines mit dem Propeller (nicht dargestellt) verbundenen Propellergetriebes 4, dass über eine Antriebswelle (nicht dargestellt) von der Turbomaschine 2 angetrieben wird, sowie zur Bereitstellung einer weiteren Ölmenge und zur Erzeugung eines vorgegebenen Ölvordrucks für eine mit einer hydraulisch betätigten Propellerverstelleinrichtung 5 verbundene Hochdruckpumpe 6. In den ersten und zweiten Ölkreislauf 1, 3 ist ein gemeinsamer Öltank 7 eingebunden, aus dem das Öl mittels einer im ersten Ölkreislauf 1 angeordneten ersten Ölförderpumpe 8 (Turbomaschinenpumpe) über einen ersten Ölfilter 9 und einen ersten Ölkühler 10 zur Turbomaschine 2 und von dort zurück in den Öltank 7 gelangt. Mit Hilfe einer im zweiten Ölkreislauf 3 angeordneten zweiten Ölförderpumpe 11 (Propellerhauptpumpe) wird Öl aus dem gemeinsamen Öltank 7 über einen zweiten Ölfilter 12 und einen zweiten Ölkühler 13 zum Propellergetriebe 4 und zur Hochdruckpumpe 6 gefördert und strömt dann zurück in den gemeinsamen Öltank 7.

Der erste und zweite Ölkreislauf 1, 3 sind hinter der ersten und zweiten Ölförderpumpe 8, 11, hier hinter dem ersten und zweiten Ölkühler 10, 13, und vor der Turbomaschine 2 bzw. dem Propellergetriebe 4 und der Hochdruckpumpe 6 über eine Ölzufuhrleitung 14 miteinander verbunden. In die Ölzufuhrleitung 14 sind ein Ventil 15 (Rückschlagventil) und ein Durchflussbegrenzer 16 (Blende) eingebunden, so dass eine begrenzte Menge des von der ersten Ölförderpumpe 8 im ersten Ölkreislauf 1 geförderten Öls zusätzlich in den zweiten Ölkreislauf 3 gelangen kann, um die erforderliche Höhe des Ölvordrucks an der Hochdruckpumpe 6 zu gewährleisten.

Das Ventil 15 ist so ausgebildet, dass nur ein Ölfluss vom ersten Ölkreislauf 1 zum zweiten Ölkreislauf 3 möglich ist, und keinesfalls in entgegengesetzter Richtung, weil ansonsten das Propellergetriebe 4 und die Hochdruckpumpe 6 in noch geringerem Umfang mit Öl versorgt werden könnten. Zum anderen öffnet das Rückschlagventil 15 nur, wenn ein vorgegebener Druckunterschied zwischen dem ersten Ölkreislauf 1 (Turbomaschinenölkreislauf) und dem zweiten Ölkreislauf 3 (Propellerölkreislauf) besteht, so dass nur in diesem Fall zusätzliches Öl in den zweiten Ölkreislauf 3 gelangen und einen zu niedrigen Ölvordruck auf das erforderliche Niveau anheben kann. Andererseits wird aber das Volumen des durch das geöffnete Ventil 15 in den zweiten Ölkreislauf strömenden Öls durch einen in die Verbindungsleitung 14 integrierten Durchflussbegrenzer 16 begrenzt, um eine Unterversorgung der Turbomaschine durch eine zu große Ölentnahme zu verhindern.

### Bezugszeichenliste

- 1: erster Ölkreislauf (Turbomaschinenölkreislauf)
- 2: Turbomaschine
- 3: zweiter Ölkreislauf (Propellerölkreislauf)
- 4: Propellergetriebe
- 5: Propellerverstelleinrichtung
- 6: Hochdruckpumpe von 5
- 7: gemeinsamer Öltank
- 8: erste Ölförderpumpe (Turbomaschinenpumpe)
- 9: erster Ölfilter
- 10: erster Ölkühler
- 11: zweite Ölförderpumpe (Propellerhauptpumpe)
- 12: zweiter Ölfilter
- 13: zweiter Ölkühler
- 14: Ölzufuhrleitung zwischen 1 und 3
- 15: Ventil in 14
- 16: Durchflussbegrenzer in 14

## Patentansprüche

1. Propellerturbinentriebwerk, das
- mindestens eine Turbomaschine,
- einen von der Turbomaschine angetriebenen Propeller mit einem Propellergetriebe und einer Propellerverstellvorrichtung (5),
- eine der Propellerverstellvorrichtung (5) zugeordnete Hochdruckpumpe,
- sowie ein Ölversorgungssystem umfasst,
- wobei das Ölversorgungssystem einen ersten Ölkreislauf (1) und eine in diesen eingebundene erste Ölförderpumpe (8) zur Versorgung der Turbomaschine (2) und einen zweiten Ölkreislauf (3) und eine in diesen eingebundene zweite Ölförderpumpe (11) zur Versorgung des Propellergetriebes (4) und der der Propellerverstellvorrichtung (5) zugeordneten Hochdruckpumpe (6) aufweist,
- wobei der erste und der zweite Ölkreislauf (1, 3) in Fließrichtung hinter der ersten und zweiten Ölförderpumpe (8, 11) über eine Ölzufuhrleitung (14) zur Einleitung eines begrenzten Ölvolumenstroms in den zweiten Ölkreislauf (3) verbunden sind, wenn bei einer Druckminderung im zweiten Ölkreislauf (3) eine bestimmte Druckdifferenz zwischen dem ersten und dem zweiten Ölkreislauf (1, 3) unterschritten wird, wobei der erste und zweite Ölkreislauf (1, 3) an einen gemeinsamen Öltank (7) angeschlossen sind.

2. Propellerturbinentriebwerk nach Anspruch 1, **dadurch gekennzeichnet, dass** in die Ölzufuhrleitung (14) ein sich bei Erreichen der vorgegebenen Druckdifferenz in Richtung des zweiten Ölkreislaufs (3) öffnendes Ventil (15) eingebunden ist.

3. Propellerturbinentriebwerk nach Anspruch 2, **dadurch gekennzeichnet, dass** das Ventil (15) ein Rückschlagventil ist.

4. Propellerturbinentriebwerk nach Anspruch 1, **dadurch gekennzeichnet, dass** in die Ölzufuhrleitung (14) zur Begrenzung des aus dem ersten Ölkreislaufs abgeführten Ölvolumenstroms ein Durchflussbegrenzer (16) eingebunden ist.

5. Propellerturbinentriebwerk nach Anspruch 4, **dadurch gekennzeichnet, dass** der Durchflussbegrenzer (16) eine Blende ist.

6. Propellerturbinentriebwerk nach Anspruch 1, **dadurch gekennzeichnet, dass** in den ersten und zweiten Ölkreislauf in Fließrichtung hinter der ersten und zweiten Ölförderpumpe jeweils ein erster und zweiter Ölfilter (9, 12) und ein erster und zweiter Ölkühler (10, 13) eingebunden sind.

7. Verfahren zur Ölversorgung eines Propellertriebwerks gemäß Anspruch 1 mithilfe eines ersten Ölkreislaufs für die Turbomaschine sowie eines zweiten Ölkreislaufs für das Propellergetriebe und eine über eine Hochdruckpumpe versorgte Propellerverstellvorrichtung, bei dem die beiden Ölkreisläufe über ein gemeinsames Ölreservoir geführt werden und bei einem unterhalb eines vorgegebenen Niveaus liegenden Ölvordruck an der Hochdruckpumpe ein begrenzter Ölvolumenstrom aus dem Turbomaschinenölkreislauf in den Propellerölkreislauf geleitet wird.

## Claims

1. Turboprop engine, comrising
- at least one turbomachine,
- one propeller driven by the turbomachine with a propeller gearbox and a propeller adjusting device (5),
- one high-pressure pump associated with the propeller adjusting device (5),
- as well as an oil supply system,
- wherein the oil supply system has a first oil circuit (1) and a first oil conveying pump (8) integrated into said oil circuit (1) for supplying the turbomachine (2), as well as a second oil circuit (3) and a second oil conveying pump (11) integrated into said oil circuit (3) for supplying the propeller gearbox (4) and the high-pressure pump (6) associated with the propeller adjusting device (5),
- wherein the first and the second oil circuit (1, 3) are connected in flow direction downstream of the first and second oil conveying pump (8, 11) via an oil supply line (14) for passing a limited oil volumetric flow into the second oil circuit (3), if in the event of a pressure reduction in the second oil circuit (3) the pressure difference between the first and the second oil circuit (1, 3) falls below a certain level, wherein the first and the second oil circuit (1, 3) are connected to a common oil tank (7).

2. Turboprop engine according to Claim 1, **characterized in that** a valve (15) is integrated into the oil supply line (14) which opens in the direction of the second oil circuit (3), when a predetermined pressure difference is reached.

3. Turboprop engine according to Claim 2, **characterized in that** the valve (15) is a non-return valve.

4. Turboprop engine according to Claim 1, **characterized in that** a flow limiter (16) is integrated into the oil supply line (14) for limiting the oil volumetric flow withdrawn from the first oil circuit.

5. Turboprop engine according to Claim 4, **characterized in that** the flow limiter (16) is a diaphragm.

6. Turboprop engine according to Claim 1, **characterized in that** a first and a second oil filter (9, 12) as well as a first and a second oil cooler (10, 13) are each integrated into the first and second oil circuit in the flow direction downstream of the first and second oil conveying pump.

7. Method for supplying oil to a turboprop engine according to Claim 1, by means of a first oil circuit for the turbomachine and of a second oil circuit for the propeller gearbox and a propeller adjusting device supplied by a high-pressure pump, where the two oil circuits are connected to a common oil tank, and where a limited oil volumetric flow is routed from the turbomachine oil circuit into the propeller oil circuit when the initial pressure of the oil at the high-pressure pump falls below a predetermined level.

## Revendications

1. Turbopropulseur, comprenant
- au moins une turbomachine,
- une hélice entraînée par la turbomachine avec un engrenage d'hélice et un dispositif de réglage d'hélice (5),
- une pompe haute pression associée au dispositif de réglage d'hélice (5),
- ainsi qu'un système d'alimentation en huile,
- dans lequel le système d'alimentation en huile présente un premier circuit d'huile (1) et une première pompe d'alimentation en huile (8) intégrée dans ledit premier circuit d'huile (1) afin d'alimenter la turbomachine (2) ainsi qu'un deuxième circuit d'huile (3) et une deuxième pompe d'alimentation en huile (11) intégré dans ledit deuxième circuit d'huile (3) afin d'alimenter l'engrenage d'hélice (4) et la pompe haute pression (6) associée au dispositif de réglage d'hélice (5),
- dans lequel le premier et le deuxième circuit d'huile (1, 3) sont reliés dans le sens d'écoulement en aval de la première et de la deuxième pompe d'alimentation en huile (8, 11) par une conduite d'amenée d'huile (14) afin d'introduire un flux volumétrique limité d'huile dans le deuxième circuit d'huile (3) lorsque, en présence d'une diminution de pression dans le deuxième circuit d'huile (3), une certaine différence de pression entre le premier et le deuxième circuit d'huile (1, 3) est dépassée vers le bas, le premier et le deuxième circuit d'huile (1, 3) étant raccordés à un réservoir d'huile (7) commun.

2. Turbopropulseur selon la revendication n° 1, **caractérisé en ce que** dans la conduite d'amenée d'huile (14) est intégré un clapet (15) s'ouvrant en
direction du deuxième circuit d'huile (3) quand est atteinte la différence de pression prédéfinie.

3. Turbopropulseur selon la revendication n° 2, **caractérisé en ce que** le clapet (15) est un clapet de non-retour.

4. Turbopropulseur selon la revendication n° 1, **caractérisé en ce que** dans la conduite d'amenée d'huile (14) est intégré un limiteur de débit (16) destiné à limiter le flux volumétrique d'huile issu du premier circuit d'huile.

5. Turbopropulseur selon la revendication n° 4, **caractérisé en ce que** le limiteur de débit (16) est un diaphragme.

6. Turbopropulseur selon la revendication n° 1, **caractérisé en ce que** dans le premier et le deuxième circuit d'huile sont intégrés dans le sens d'écoulement en aval de la première et de la deuxième pompe d'alimentation en huile respectivement un premier et un deuxième filtre à huile (9, 12) et un premier et un deuxième refroidisseur d'huile (10, 13).

7. Procédé destiné à alimenter en huile un turbopropulseur selon la revendication n° 1 à l'aide d'un premier circuit d'huile pour la turbomachine ainsi que d'un deuxième circuit d'huile pour l'engrenage d'hélice et un dispositif de réglage d'hélice alimenté par une pompe haute pression, procédé dans lequel les deux circuits d'huile sont raccordés à un réservoir d'huile commun, et lorsque la pression d'alimentation est inférieure à un niveau prédéfini dans la pompe haute pression, un flux volumétrique limité d'huile provenant du circuit d'huile de la turbomachine est introduit dans le circuit d'huile de l'hélice.
